# FASCICULE DE BREVET EUROPEEN

(11) **EP 1 771 402 B1**
(45) Date de publication et mention de la délivrance du brevet: **11.01.2012**
(21) Numéro de dépôt: 05792027.4
(22) Date de dépôt: 20.07.2005
(51) Int. Cl.: C05G 3/00

(54) **GRANULES D'ENGRAIS ET PROCEDE DE FABRICATION**
DÜNGERGRANULAT UND VERFAHREN ZU SEINER HERSTELLUNG
FERTILIZER GRANULES AND METHOD FOR MAKING SAME

(30) Priorité: 06.08.2004 FR 0451805
(43) Date de publication de la demande: 11.04.2007
(73) Titulaire: SNF SAS, 42160 Andrezieux-Boutheon (FR)
(72) Inventeur: BROSSE, Jacques, F-42320 LA GRAND CROIX (FR); DELHEUR, Stéphane, F-42610 SAINT GEORGES HAUTE VILLE (FR); PHILIBERT, Eric, F-42350 LA TALAUDIERE (FR)
(74) Mandataire: Denjean, Eric
(86) Numéro de dépôt international: PCT/FR2005/050598
(87) Numéro de publication internationale: WO 2006/021708

(56) Documents cités:
- EP-A- 0 255 752
- WO-A-97/07675
- DE-A1- 4 313 671
- DE-C1- 4 040 771
- US-A1- 2004 009 878
- US-A1- 2004 069 032
- DATABASE WPI Section Ch, Week 200009 Derwent Publications Ltd., London, GB; Class A97, AN 2000-101056 XP002322518 & JP 11 335662 A (HYMO CORP) 7 décembre 1999 (1999-12-07)
- DATABASE WPI Section Ch, Week 198239 Derwent Publications Ltd., London, GB; Class A97, AN 1982-82498E XP002322519 & JP 57 135790 A (KURITA WATER IND LTD) 21 août 1982 (1982-08-21)

## Description

La présente invention concerne le secteur technique des engrais en général, et plus particulièrement les compositions d'engrais mises sous la forme de granulés ainsi que leur procédé de fabrication.

Les engrais sont des matières nutritives, organiques ou minérales, qui ont pour rôle d'accroître ou de maintenir la fertilité notamment des végétaux en leur apportant des éléments fertilisants tels que azote, potassium, phosphore, calcium, magnésium, soufre... ainsi que des oligo-éléments.

De façon classique, pour en faciliter l'emploi et la conservation, les engrais sont souvent mis sous la forme de granulés.

Dans la plupart des cas, le procédé utilisé pour obtenir des granulés d'engrais fait appel à une opération d'agglomération sans compression appelée granulation par voie humide. Cette technique de granulation vise à transformer en petits grains des matières généralement pulvérulentes.

L'agglomération se fait en introduisant dans un agitateur (de type granulateur à tambour ou granulateur à plateau) d'une part la poudre pulvérulente (ou un mélange de solides), d'autre part une petite quantité d'un liquide qui est généralement de l'eau. Ceci à pour effet de provoquer l'agglomération des particules entre elles débouchant ainsi sur la formation d'agglomérats qui prennent une forme sphérique en roulant et se frottant entre eux.

Parmi les nombreux facteurs qui caractérisent les granulés et l'efficacité de l'opération de granulation, les principaux sont la taille des particules et leur distribution ainsi que la dureté des granules obtenues.

De façon classique, on utilise très fréquemment divers additifs dont des agents liants qui ont pour but de réduire la quantité d'eau utilisée et donc le coût de l'opération de séchage.

Parmi les principaux agents liants utilisés pour la fabrication de granulés d'engrais, on pourra citer :
- l'acide sulfurique qui est corrosif et pose des problèmes quant à la dangerosité de son stockage,
- la bentonite qui nécessite d'être utilisée en grosse quantité (de l'ordre de 10%) ce qui réduit d'autant le ratio de matière active,
- ou les dérivés cellulosiques tels que la carboxymethyl cellulose (CMC) qui sont relativement onéreux.

Le document DE 40 40 771 décrit des particules d'engrais constituées d'un noyau comprenant une matière organique d'origine naturelle constituée de bois et de marc, mélangés avec des polymères hydrosolubles naturels du type pectine, alginate. Le noyau est ensuite encapsulé par de la gélatine. Le produit proposé n'est pas un granule obtenu par voie humide, mais correspond à des particules obtenues par procédé d'encapsulation. En outre, l'ensemble des polymères cités sont des polymères anioniques, dont le Demandeur a constaté qu'ils étaient soit inutilisables dans un procédé de granulation, soit mis en oeuvre dans des quantités réduisant le ratio de matière active.

Le document EP-A-255 752 décrit des granules d'agent fertilisant enrobés d'une composition à base d'acide 3-hydroxy-3-alkylpropionique utilisé comme agent antimicrobien en présence de polymères aptes à accélérer, ou au contraire retarder, la dissolution dudit agent anti-microbien. Compte tenu de leur fonction, les polymères sont des polymères non hydrosolubles dans l'eau, utilisés non pas comme agent liant, mais pour permettre la libération plus ou moins retardée de l'agent anti-microbien.

Le document US 2004/009878 décrit des pellets d'agent fertilisant intégrant, en tant qu'agent liant, des polymères synthétiques organiques, tels que polyacrylamide. Ces polymères sont des polymères anioniques, dont les inconvénients sont mentionnés ci-avant.

US2004/0069032 A1 décrit un engrais granulaire contenant un polyacrylamide qui peut être hydrosoluble et cationique, et présent à 2.33%.

WO 97/07675 A1 décrit une composition à libération prolongée comprenant, entre autres, des ingrédients d'origine agricole et un polymère hydrosoluble, sous forme de granule, dans laquelle le polymère peut être cationique et constitue 15-40% de la composition.

La présente invention vise à combler ces lacunes.

Elle a pour objet des granules d'engrais contenant, en tant qu'agent liant, au moins un polymère organique, selon la revendication 1.

En pratique, le polymère cationique a un poids moléculaire supérieur à 10000, de préférence supérieur à 50000, voire 100000.

Plus précisément, selon l'invention, il a été trouvé de manière surprenante qu'il est possible, en utilisant un polymère organique cationique hydrosoluble comme agent liant lors d'une opération de granulation de compositions fertilisantes par voie humide, d'obtenir des granulés de dimension recherchée et uniforme tout en palliant les difficultés des procédés classiques.

Dans la suite de la description, on désigne par l'expression « polymère au moins partiellement cationique » :
- un polymère totalement cationique c'est à dire du type (homo) polymère comprenant au moins deux monomères cationiques
- un polymère partiellement ionique, c'est à dire un polymère du type copolymère comprenant au moins un monomère cationique et un ou plusieurs autres co-monomères non ioniques et/ou anioniques.

Le polymère est partiellement cationique, et les monomères cationiques représentent au moins 30 en mole % du polymère.

Les monomères cationiques sont avantageusement choisis dans le groupe comprenant les sels de diallyldialkyl ammonium comme le chlorure de diallyl dimethyl ammonium (DADMAC) et encore les acrylates et methacrylates de dialkylaminoalkyle, en particulier l'acrylate de dialkylaminoéthyle (ADAME) et le méthacrylate de dialkylaminoéthyle (MADAME), ainsi que leurs sels acidifiés ou quaternisés par les moyens connus de l'homme de métier, comme le chlorure de benzyle, le chlorure de méthyle (MeCI), les chlorures d'aryle, d'alkyle, le diméthylsulfate, et encore les dialkyl-aminoalkylacrylamides ou -methacrylamides, ainsi que leurs sels acidifiés ou quaternisés de manière connue, par exemple le methacrylamido-propyl triméthyl ammonium chlorure (MAPTAC) et les produits de Mannich comme les dialkylaminométhylacrylamides quaternisés.

Les co-monomères convenables peuvent être :
- non ioniques, comme par exemple ceux choisis dans le groupe comprenant l'acrylamide, le methacrylamide, le N-vinylméthylacétamide ou le N-vinylformamide, l'acétate de vinyle, la vinylpyrrolidone, le methacrylate de méthyle ou d'autres esters acryliques, ou d'autres esters à insaturation éthylénique, ou encore d'autres monomères vinyliques insolubles dans l'eau comme le styrène ou l'acrylonitrile,
- et/ou anioniques. A titre d'exemple on citera les monomères possédant une fonction carboxylique (ex : acide acrylique, acide methacrylique, et leurs sels...), les monomères possédant une fonction acide sulfonique (ex : acide 2-acrylamido-2-méthylpropane sulfonique (AMPS) et leurs sels...)...

Dans un mode de réalisation préféré, l'agent liant comprend au moins un (homo) ou (co) polymère cationique à base de sels de diallyldialkyl ammonium, de préférence le DADMAC.

Les polymères organiques cationiques peuvent également être également choisis dans le groupe comprenant polyéthylène imine, polyvinylamine, polyamine à base d'épichlorhydrine, résine dicyandiamide, résine mélamine formaldéhyde.

Les polymères utilisables selon l'invention sont bien connus en eux-même, ainsi que leurs procédés de synthèse.

On citera par exemple et de façon non limitative :
- la polymérisation en solution
- la polymérisation en émulsion inverse (eau dans huile) qui peut être suivi ou non par un séchage par pulvérisation (ou " spray drying ")
- la polymérisation en gel avec broyage ultérieur du gel pour obtenir directement une poudre
- la polymérisation sous UV
- les dispersions aqueuses de polymères hydrosolubles, appelées aussi dispersions eau dans eau ou émulsions eau dans eau
- la polymérisation en suspension inverse qui permet d'obtenir des polymères sous forme de billes...

Selon l'invention, les polymères organiques cationiques employés peuvent être linéaires ou ramifiés.

De manière connue, un polymère est ramifié lorsqu'un agent de ramification est utilisé durant ou après la polymérisation, en association ou non avec un agent de transfert. De façon non limitative, les agents de ramification que l'on peut utiliser comprennent des agents de ramification ioniques, comme les sels de métal polyvalent, le formaldéhyde, le glyoxal, ou encore, et de préférence, des agents de réticulation covalents qui vont copolymériser avec les monomères et de préférence des monomères à insaturation polyéthylénique (ayant au minimum deux fonctions insaturées), comme par exemples les fonctions vinyliques, allyliques, acryliques et époxy (comme par exemple le méthylène bis acrylamide (MBA)). En pratique, l'agent de ramification est introduit à raison de cinq à mille (5 à 1000) moles par million de moles de monomères, de préférence 5 à 200.

Selon un mode tout à fait préféré de mise en oeuvre du procédé général de l'invention, les polymères se présentent sous la forme d'une solution aqueuse présentant un pH acide (pH < 7), de préférence un pH inférieur à 5.

L'invention a également pour objet l'utilisation du polymère au moins partiellement cationique précédemment décrit comme agent liant dans des granules d'engrais.

Lors de la mise en oeuvre du procédé de granulation, généralement, l'introduction du polymère intervient soit, intégralement ou partiellement, pendant une opération de pré-mélange avec la matière fertilisante soit, intégralement ou partiellement, au niveau du granulateur.

L'invention concerne donc également le procédé de fabrication des granules d'engrais ci-avant décrits, procédé selon lequel on granule par voie humide un mélange comprenant l'engrais et l'agent liant.

Dans un mode de réalisation particulier, tout ou partie du mélange est préalablement préparé à sec, c'est à dire que l'ensemble des poudre est mélangé à sec avant granulation.

Il convient de noter que l'invention ne vise pas seulement l'association par mélange, de (co)polymère(s) cationique(s) avec des matières fertilisantes, mais également une nouvelle structure physique de ces granulés, créée par l'introduction de proportions spécifiques du polymère avant et/ou au cours du procédé de granulation.

L'invention vise également :
- en premier lieu des granulés d'engrais contenant dans leur structure de 0,01 à 0,5 % en poids, de préférence 0,03 à 0,2% en poids, d'un polymère organique cationique tel que défini précédemment
- en second lieu un procédé pour la fabrication de ces granulés, consistant, dans le processus connu de fabrication de granulés d'engrais, à introduire, au moment de l'étape de granulation par voie humide, au moins un polymère organique cationique, à raison de 0,01 à 0,5 % en poids, de préférence 0,03 à 0,2% en poids.

A la lecture de la présente demande, l'homme de métier saura choisir la meilleure combinaison, choix du polymère et quantité requise, en fonction de ses connaissances propres et/ou à l'aide d'essais de routine.

Parmi les matières fertilisantes ou engrais couramment granulées, on peut citer à titre d'exemple les dérivés ammoniacaux (N) (tels que le sulfate d'ammonium, le nitrate d'ammonium, l'urée...), les phosphates (P), les dérivés de la potasse (K) ou les engrais complexes (NPK, NP, NK, PK)...

L'invention et les avantages qui en découlent ressortiront mieux des exemples suivants.

### EXEMPLES :

Les essais ci-après présentent, sans toutefois limiter l'invention, des tests de granulation effectués sur un même engrais complexe en fonction des agents liants utilisés.
Matériel : un malaxeur, un granulateur à plateau et un sécheur
Matière fertilisante : de type organo-minérale de formulation NPK 5-7-9 et comprenant 56% en poids de lignite
Abréviation : AM : acrylamide ; AA Na : acrylate de soude ; MADAME+ : chlorure de méthacrylate de triméthylaminoéthyl

La répartition granulométrique est effectuée à l'aide de tamis de différente taille.

Le test de résistance des billes a pour but de mesurer la résistance à l'écrasement de celles-ci. Il consiste à relever une pression maximum appliquée sur des granulés de taille identique avant leur déformation (point de cassage).

Interprétation des résultats : 2 : très bon ; 1 : bon ; 0 : satisfaisant ; -1 : non satisfaisant.

### A/ Utilisation d'un agent liant sous forme solide :

### Descriptif du protocole de laboratoire :

- pesée des quantités de fertilisant(s) nécessaires
- pesée de la quantité définie d'agent liant
- pré-mélange de l'agent liant et des fertilisants et homogénéisation
- transfert du mélange dans le granulateur : l'agglomération se fait en pulvérisant de l'eau ou de la vapeur sur le mélange, soit environ 14 % en poids, jusqu'à obtention de billes présentant une granulométrie satisfaisante (remarque : une partie de l'eau peut être incorporée lors de l'étape de pré-mélange).

Les granules obtenues sont alors pré-séchées à l'aide d'un décapeur thermique puis transférées dans une étuve à 50°C pendant 12 h.

**Tableau comparatif 1 : agent liant sous forme solide (poudre (a) ou billes (b))**

| | Agent liant : composition chimique en moles % (poids moléculaire) | Granulation | Homogénéité | Dureté | Dosage en Kg de polymère (sec) / T de matière fertilisante |
|---|---|---|---|---|---|
| 1 | AA Na 100 (3.000.000) | NON | - | - | 1 |
| 2 | AM / AA Na 30/70 (3.000.000) | NON | - | - | 1 |
| 3 | AA / AA Na 70/30 (3.000.000) | NON | - | - | 1 |
| 4 | Bentonite | OUI | 0 | -1 | 5 |
| 5 | Bentonite | OUI | 1 | 1 | 10 |
| 6 | Bentonite | NON | - | - | 1 |
| 7a * | MADAME+ 100 (1.000.000) | OUI | 2 | 1 | 1 |
| 8a * | AM / MADAME+ 40/60 (3.000.000) | OUI | 1 | 0 | 1 |
| 9a * | AM / MADAME+ 70/30 (3.000.000) | OUI | 0 | 0 | 1 |
| 10b * | DADMAC 100 (100.000) | OUI | 1 | 1 | 1 |
| 11b * | AM/DADMAC 40/60 (500.000) | OUI | 1 | 0 | 1 |

| | | | | | |
|---|---|---|---|---|---|
| *: essais relatifs à l'invention | | | | | |

### B/ Utilisation d'un agent liant sous forme liquide

### Descriptif du protocole de laboratoire :

- pesée des quantités de fertilisants nécessaires
- préparation d'une solution diluée de polymère à 0,15% de matière active
- pulvérisation du polymère sur la matière fertilisante à raison de 3% en poids de la solution diluée
- transfert du mélange dans le granulateur

L'agglomération se fait en pulvérisant de l'eau ou de la vapeur sur le mélange, soit environ 7 % en poids, jusqu'à obtention de billes présentant une granulométrie satisfaisante (remarque : une partie de l'eau peut être incorporée avant cette étape)

**Tableau comparatif 2 : agent liant utilisé sous forme liquide**

| | Agent liant : composition chimique en moles % (poids moléculaire) [pH] | Granulation | Homogénéité | Dureté | Dosage en Kg de polymère (sec) / T de matière fertilisante |
|---|---|---|---|---|---|
| 12 | AA Na 100 (20.000) | NON | - | - | 0,45 |
| 13 | AA/AANa 70/30 (100.000) | NON | - | - | 0,45 |
| 14c * | MADAME+ 100 (20.000) [3] | OUI | 1 | 1 | 0,45 |
| 15c | MADAME+ 100 (5.000) [3] | NON | - | - | 0,45 |
| 16 * | AM / MADAME+ 50/50 (300.000) [3] | OUI | 1 | 0 | 0,45 |
| 17 * | AM / MADAME+ 70/30 (300.000) [3] | OUI | 0 | 0 | 0,45 |
| 18 | AM/MADAME+ 80/20 (300.000) [3] | OUI | -1 | -1 | 0,45 |
| 19 * | DADMAC 100 (100.000) [6] | OUI | 1 | 1 | 0,45 |
| 20 * | DADMAC pH=3 100 (100.000) [3] | OUI | 2 | 2 | 0,45 |
| 21 * | AM / DADMAC 40/60 (500.000) [3] | OUI | 1 | 0 | 0,45 |
| 22 * | Polyamine (diméthyl amine + épichlorhydrine) (80.000) [5] | OUI | 1 | 0 | 0,45 |

| | | | | | |
|---|---|---|---|---|---|
| *: essais relatifs à l'invention | | | | | |

A titre comparatif, l'utilisation d'acide sulfurique comme agent liant donne les résultats ci-après (addition en continu dans le plateau granulateur).

| | Agent liant : solution aqueuse 80% d'actif | Granulation | Homogénéité | Dureté | Dosage en Kg d'acide / T de matière fertilisante |
|---|---|---|---|---|---|
| 23 | Acide sulfurique | OUI | 1 | 2 | 10 |
| 24 | Acide sulfurique | NON | - | - | 5 |

### CONCLUSION :

Comme on peut le constater, les résultats obtenus par les polymères organiques cationiques de l'invention sont tout à fait conformes aux attentes de l'industrie. Il apparaît, en effet, clairement qu'au dosage préconisé, seuls ceux-ci développent un pouvoir de granulation optimal (les granules sont dures et homogènes).

De plus, les observations des différents granulés réalisés montrent que l'effet du poids moléculaire, lorsque celui-ci est supérieur à 10.000, n'est pas significatif. Toutefois, une cationicité supérieure à 30 en mole % est nécessaire pour obtenir une granulation efficace.

Parallèlement, on remarque que de façon surprenante, lorsque le pH de la solution de polymère est fortement acide, les granulés obtenus présentent une meilleure homogénéité et une dureté optimisée.

## Revendications

1. Granule d'engrais contenant, en tant qu'agent liant, au moins un polymère organique, **caractérisé en ce que** ledit polymère organique est un polymère hydrosoluble contenant au moins 30 mole % de monomère cationique, ledit polymère ayant un poids moléculaire d'au moins 10 000 et représentant entre 0,01 et 0,5% en poids dudit granule.

2. Granule selon la revendication 1, **caractérisé en ce que** le polymère représente entre 0,03 et 0,2% en poids dudit granule.

3. Granule selon la revendication 1, **caractérisé en ce que** le polymère est du type (homo) ou (co) polymères comprenant au moins un monomère cationique et éventuellement un ou plusieurs autres co-monomères non ioniques et/ou anioniques.

4. Granule selon la revendication 3, **caractérisé en ce que** le monomère cationique est choisi dans le groupe comprenant le chlorure de diallyl dimethyl ammonium (DADMAC) l'acrylate de dialkylaminoéthyle (ADAME), le méthacrylate de dialkylaminoéthyle (MADAME), le methacrylamido-propyl triméthyl ammonium chlorure (MAPTAC) ainsi que leurs sels acidifiés ou quatemisés.

5. Granule selon la revendication 3, **caractérisé en ce que** le co-monomère non ionique est choisi dans le groupe comprenant l'acrylamide, le methacrylamide, le N-vinylméthylacétamide, le N-vinylformamide, l'acétate de vinyle, la vinylpyrrolidone, le methacrylate de méthyle, le styrène, l'acrylonitrile.

6. Granule selon la revendication 3, **caractérisé en ce que** le monomère anionique est choisi dans le groupe comprenant l'acide acrylique, l'acide methacrylique, l'acide 2-acrylamido-2-méthylpropane sulfonique (AMPS) et leurs sels.

7. Granule selon la revendication 1, **caractérisé en ce que** le polymère organique est choisi dans le groupe comprenant polyéthylène imine, polyvinylamine, polyamine à base d'épichlorhydrine, résine dicyandiamide, résine mélamine formaldéhyde.

8. Granule selon la revendication 1, **caractérisé en ce que** le polymère est un (homo) ou (co) polymère cationique à base de DADMAC.

9. Granule selon la revendication 1, **caractérisé en ce que** le polymère se présente sous la forme d'une solution aqueuse présentant un pH acide (pH < 7), de préférence un pH inférieur à 5.

10. Procédé de fabrication des granules d'engrais objet de l'une des revendications 1 à 9, **caractérisé en ce qu'**on granule par voie humide un mélange comprenant l'engrais et l'agent liant.

11. Procédé selon la revendication 10, **caractérisé en ce que** tout ou partie du mélange est préalablement préparé à sec.

## Claims

1. A fertilizer granule containing, as a binder, at least one organic polymer **characterised in that** said organic polymer is a hydrosoluble polymer containing at least 30 mol % of cationic monomers, said polymer having a molecular weight of at least 10 000 and representing from 0.01 to 0.5% by weight of the granule.

2. A granule as claimed in claim 1, **characterised in that** the polymer represents from 0.03 to 0.2% by weight of said granule.

3. A granule as claimed in claim 1, **characterised in that** the polymer is of the homopolymer or copolymer type comprising at least one cationic monomer and, if applicable, one or more other non-ionic and/or anionic comonomers.

4. A granule as claimed in claim 3, **characterised in that** the cationic monomer is selected from the group comprising diallyldimethyl ammonium chloride (DADMAC), dialkylaminoethyl acrylate (ADAME), dialkylaminoethyl methacrylate (MADAME), methacrylamidopropyltrimethylammonium chloride (MAPTAC) as well as their acidified or quaternized salts.

5. A granule as claimed in claim 3, **characterised in that** the non-ionic comonomer is selected from the group comprising acrylamide, methacrylamide, N-vinylmethylacetamide, N-vinylformamide, vinyl acetate, vinylpyrrolidone, methyl methacrylate, styrene, acrylonitrile.

6. A granule as claimed in claim 3, **characterised in that** the anionic monomer is selected from the group comprising acrylic acid, methacrylic acid, 2-acrylamido-2-methylpropane sulphonic acid (AMPS) and their salts.

7. A granule as claimed in claim 1, **characterised in that** the organic polymer is selected from the group comprising polyethylene imine, polyvinylamine, epichlorohydrine-based polyamine, dicyandiamide resin, melamine formaldehyde resin.

8. A granule as claimed in claim 1, **characterised in that** the polymer is a DADMAC-based cationic homopolymer or copolymer.

9. A granule as claimed in claim 1, **characterised in that** the polymer is in the form of an aqueous solution having an acid pH (pH < 7), preferably a pH less than 5.

10. A process for manufacturing fertilizer granules that are the subject of any of claims 1 to 9 **characterised in that** a mixture comprising the fertilizer and the binder is wet granulated.

11. A process as claimed in claim 10, **characterised in that** all or part of the mixture is previously prepared dry.

## Patentansprüche

1. Düngergranulat, das als Bindemittel mindestens ein organisches Polymer enthält, **dadurch gekennzeichnet, dass** das organische Polymer ein wasserlösliches Polymer ist, das mindestens 30 Mol-% eines kationischen Monomers enthält, wobei das Polymer ein Molekulargewicht von mindestens 10.000 hat und zwischen 0,01 und 0,5 Gew.-% des Granulats darstellt.

2. Granulat nach Anspruch 1, **dadurch gekennzeichnet, dass** das kationische Polymer zwischen 0,03 und 0,2 Gew.-% des Granulats darstellt.

3. Granulat nach Anspruch 1, **dadurch gekennzeichnet, dass** das kationische Polymer von der Art der Homo- oder Co-Polymere ist, die mindestens ein kationisches Monomer und gegebenenfalls ein oder mehrere andere nicht ionische und/oder anionische Co-Monomere umfasst.

4. Granulat nach Anspruch 3, **dadurch gekennzeichnet, dass** das kationische Monomer aus der Gruppe ausgewählt ist, die Diallyldimethylammoniumchlorid (DADMAC), Dialkylaminoethylacrylat (ADAME), Dialkylaminoethylmethacrylat (MADAME), Methacrylamidopropyltrimethylammoniumchlorid (MAPTAC), sowie deren gesäuerte oder quaternisierte Salze umfasst.

5. Granulat nach Anspruch 3, **dadurch gekennzeichnet, dass** das nichtionische CoMonomer aus der Gruppe ausgewählt ist, die Acrylamid, Methacrylamid, N-Vinylmethylacetamid, N-Vinylformamid, Vinylacetat, Vinylpyrrolidon, Methylmethacrylat, Styrol und Acrylnitril umfasst.

6. Granulat nach Anspruch 3, **dadurch gekennzeichnet, dass** das anionische Monomer aus der Gruppe ausgewählt ist, die Acrylsäure, Methacrylsäure, 2-Acrylamid-2-methylpropansulfonsäure (AMPS) und deren Salze umfasst.

7. Granulat nach Anspruch 1, **dadurch gekennzeichnet, dass** das kationische organische Polymer aus der Gruppe ausgewählt ist, die Poly-ethylenimin, Polyvinylamin, Polyamin auf Basis von Epichlorhydrin, Dicyandia-midharz und Melaminformaldehydharz umfasst.

8. Granulat nach Anspruch 1, **dadurch gekennzeichnet, dass** das zumindest teilweise kationische Polymer ein kationisches Homo- oder Co-Polymer auf der Basis von DADMAC ist.

9. Granulat nach Anspruch 1, **dadurch gekennzeichnet, dass** sich das kationische Polymer in Form einer wässrigen Lösung darstellt, die ei-nen sauren pH Wert (pH < 7), vorzugsweise einen pH-Wert von unter 5 auf-weist.

10. Verfahren zur Herstellung von Düngergranulat nach einem der Ansprüche 1 bis 9, **dadurch gekennzeichnet, dass** ein Gemisch, das den Dünger und ein Bindemittel umfasst, auf feuchtem Wege granuliert wird.

11. Verfahren nach Anspruch 10, **dadurch gekennzeichnet, dass** das gesamte Gemisch oder ein Teil des Gemischs vorab trocken aufbereitet wird.
